# EUROPEAN PATENT APPLICATION

(11) **EP 1 052 578 A2**
(43) Date of publication of application: **15.11.2000**
(21) Application number: 00303757.9
(22) Date of filing: 04.05.2000
(51) Int. Cl.: G06F 17/30

(54) **Contents extraction system and method**

(30) Priority: 10.05.1999 JP 12818899
(71) Applicant: MATSUSHITA ELECTRIC INDUSTRIAL CO., LTD., Kadoma-shi, Osaka-fu (JP)
(72) Inventor: Senoh, Takanori, Osaka-fu, 573-0093 (JP)
(74) Representative: Rackham, Stephen Neil

(57) **Abstract**

A user characteristic data recording medium (1) previously recorded with user characteristic data indicative of preference for a user is detachably loaded on the user terminal device (2) so that the user characteristic data recorded on the user characteristic data recording medium (1) is inputted to the user terminal unit, and thus the multimedia contents are automatically retrieved using the inputted user characteristic data as a retrieval keyword identifying characteristics of the multimedia contents which are of interest to the user, and the desired contents for the user are automatically selected and extracted to be displayed based on the retrieval results.

## Description

The present invention is generally relates to a multimedia contents extraction system and method, and in particular to a multimedia contents retrieval/selection system and method using a user description data recording medium having recorded with information indicative of preferences and characteristics of a user, for automatically retrieving/selecting and displaying the contents as expected to be desired by the user from a multimedia database. The multimedia database accumulates a large capacity of multimedia contents such as digitized audio and/or video data, so that the multimedia contents suited to the preference of the user are selectively extracted based on the user description data recorded on the user description data recording medium which is used as a retrieval keyword.

In a conventional multimedia contents retrieval system, a user selects a desired category, for example, on a menu-mode screen of a user terminal device and inputs a keyword indicating a characteristic or feature of desired contents to the retrieval system every operation time. Then, the retrieval system selectively extracts the contents including the particular keyword from the database and a list of the extracted contents and the contents per se are supplied and displayed to the user.

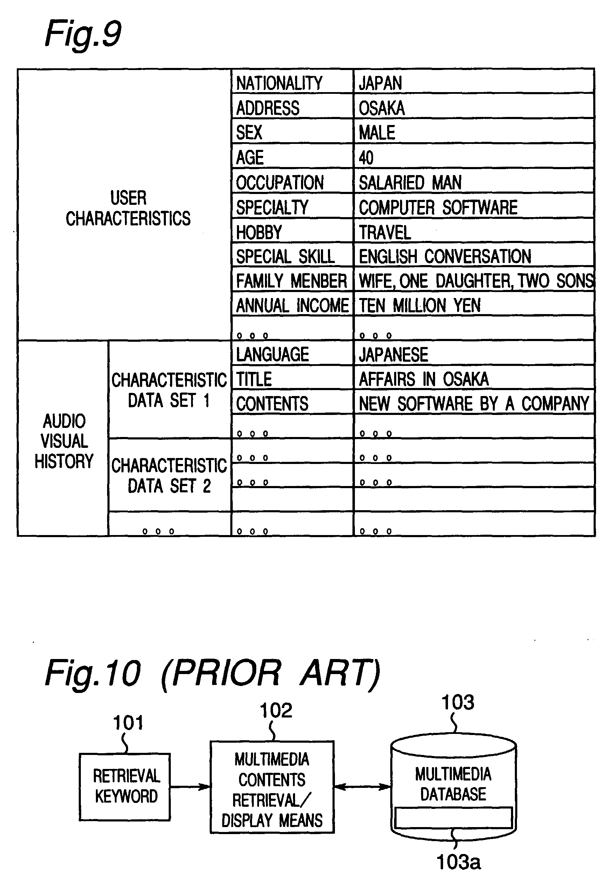

A conventional technique as mentioned above is disclosed in the U.S. Patent 5,794,249. In a configuration of this conventional system, as shown in Fig. 10, a large capacity of contents of various kinds and categories are recorded and accumulated in a recording tape-like or other recording medium 103a in a database 103. The user controls a multimedia contents retrieval and display unit 102 to thereby retrieve and display desired contents.

In order to facilitate the extraction of desired contents, the user inputs a keyword identifying a characteristic of the desired contents into the multimedia contents retrieval and display unit 102 using a keyword input unit 101 such as a keyboard input means. In this arrangement, contents keywords indicating specifics of each of a plurality of contents accumulated in the database 103 are previously extracted from the database and stored in the contents retrieval and display unit 102 in a table format of the listed specifics. Upon receipt of the user input keyword for retrieval, the contents retrieval and display unit 102 compares the user input keyword with the contents specifics listed in the table and selects the contents having a coincident keyword and displays a list of the selected contents. Then, the user selects the desired contents among from the list so that the desired contents are displayed and reproduced.

In this conventional retrieval system, however, the user is required to manually input the keyword for retrieval of the contents to be displayed by the display unit 102 every time the contents are desired to be retrieved. Moreover, if the user input keyword for retrieval is not coincident with the keyword of the specific of the desired contents accumulated in the database, the desired contents can not be correctly extracted. Thus, the conventional system has the disadvantages of lacking the ability of quick retrieval and high accuracy.

Accordingly, there is a need to provide a method and system for accurately and quickly extracting the desired contents by automatically identifying the contents of interest to the user without requiring the user to specify a keyword for a search criteria on the keyboard input means.

It is an essential object of the present invention to provide an improved multimedia contents extraction system for automatically extracting multimedia contents desired by a user with high accuracy and reduction of time consumption.

It is another object of the present invention to provide an improved multimedia contents extraction method of automatically extracting multimedia contents desired by a user with high accuracy and reduction of time consumption.

It is a further object of the present invention to provide a user description data recording medium having recorded with user characteristic data adapted to the improved multimedia contents extraction system.

In order to attain the objects, one aspect of the invention provides a multimedia contents extraction system which comprises: a user characteristic data recording medium previously recorded with user characteristic data indicative of preference for a user; a contents storage supply portion for storing a plurality of multimedia contents and supplying desired contents to the user; and a user terminal device for selectively extracting and displaying the desired contents for the user among from the plurality of multimedia contents stored in the contents storage supply portion, wherein the user characteristic data recording medium is detachably loaded on the user terminal device so that the user characteristic data recorded on the user characteristic data recording medium is inputted to the user terminal unit, whereby the multimedia contents are automatically retrieved using the inputted user characteristic data as a retrieval keyword identifying characteristics of the multimedia contents which are of interest to the user, and the desired contents for the user are automatically selected and extracted to be displayed based on the retrieval results.

In this construction, the user terminal device includes: a user recording medium loading portion for loading the user characteristic data recording medium and inputting the user characteristic data as the keyword for retrieval; a keyword reading portion for reading the retrieval keyword of the inputted user characteristic data; a retrieval and similarity evaluating portion for retrieving the characteristics of each of the multimedia contents using the retrieval keyword and evaluating a measure of similarity between the user characteristic data and the characteristics of each of the contents; and a contents selection and extraction portion for selectively extracting the multimedia contents evaluated to be similar to the user characteristic data based on the similarity evaluation results.

Another aspect of the invention provides a user characteristic data recording medium adapted to a multimedia contents extraction system including a user terminal device which automatically selects and extracts multimedia contents which are of interest to a user among from a plurality of multimedia contents previously accumulated in a contents storage supply portion, the user characteristic data recording medium being previously recorded with user characteristic data indicative of preference for a user, wherein the user characteristic data recording medium is detachably loaded on the user terminal device so that the user characteristic data recorded on the user characteristic data recording medium is inputted to the user terminal device, whereby the multimedia contents are automatically retrieved using the inputted user characteristic data as a retrieval keyword identifying characteristics of the multimedia contents which are of interest to the user, and the desired contents for the user are automatically selected and extracted to be displayed based on the retrieval results.

A further aspect of the invention provides a multimedia contents extraction method comprising steps of: inputting user characteristic data indicative of preference of a user; searching multimedia contents desired by the user among a plurality of multimedia contents accumulated in a multimedia database using the inputted user characteristic data as a retrieval keyword so that automatic personalized extraction of the contents for the user preference is performed based on the retrieval results.

In this multimedia contents extraction method, user desired multimedia contents are automatically selected and extracted among from a plurality of multimedia contents previously accumulated in a contents storage supply portion using a user characteristic data recording medium previously recorded with user characteristic data which is indicative of preference for a user. The method comprises: inputting and reading the user characteristic data previously recorded on the user characteristic data recording medium by loading the user characteristic data recording medium on a user terminal device; automatically retrieving the multimedia contents using the inputted user characteristic data as a retrieval keyword identifying characteristics of the multimedia contents which are of interest to the user; and automatically selecting and extracting the user desired contents to be displayed based on the retrieval results.

The foregoing and other features, aspects and advantages of the invention will become better understood with regard to the following description, appended claims and accompanying drawings in which:
Fig. 1 is a block diagram showing a generic configuration of a multimedia contents automatic extraction system according to the present invention;
Fig. 2 is a block diagram showing a configuration of a multimedia contents automatic retrieval system according to a first embodiment of the present invention;
Fig. 3 is a table view showing an example of the user description data according to the present invention;
Fig. 4 is a diagram showing a table of characteristic data extracted from multimedia contents according to the present invention;
Fig. 5 is a block diagram showing a configuration of a multimedia broadcast contents selecting system according to a second embodiment of the present invention;
Fig. 6 is a diagram showing a table of characteristic data extracted from multimedia contents in broadcast according to the second embodiment;
Fig. 7 is a block diagram showing a configuration of a multimedia contents transmission and receiving system according to a third embodiment of the present invention;
Fig. 8 is a flowchart showing an operation of a multimedia contents automatic extraction system according to the present invention;
Fig. 9 is a table view showing another example of the user description data according to the present invention; and
Fig. 10 is a block diagram showing a configuration of a conventional multimedia contents retrieval system.

The following describes the preferred embodiments of a multimedia contents extraction system according to the present invention with reference to the accompanying drawings. In this context, it is noted that the term "multimedia contents extraction system" gives a generic name of a multimedia contents retrieval and display system, broadcast contents automatic selection receiver display system, and multimedia contents automatic selective supply or transmission/receiving system.

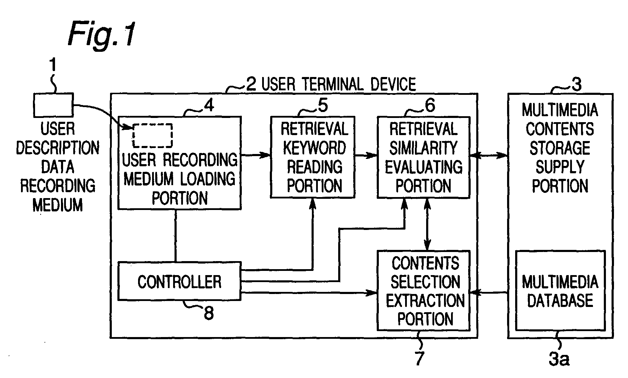

Fig. 1 shows a block configuration example of a multimedia contents extraction system according to a generic embodiment of the present invention. In this construction, the multimedia contents extraction system is a combination of a user terminal device 2 and multimedia contents storage supply portion 3 using a user description data recording medium 1 adapted thereto. The user description data recording medium 1 is previously recorded with user description data which serves as basic data of a retrieval keyword for identifying characteristics and preferences of a user. It is noted here that the user description data is also referred to as "user characteristic data" hereinafter.

The user description data recording medium 1 is detachably loaded on the user terminal device 2 to input the user description data for use as the retrieval keyword. The user terminal device 2 is connected to the multimedia contents storage supply portion 3 which includes a multimedia database 3a for storing a large capacity of multimedia contents of various categories to be selectively extracted, so that the contents data can be transmitted and received between each of the user terminal devices and an external host computer (not shown) and the like.

By this arrangement, the user description data indicative of characteristics and preference of a user is inputted for automatically searching multimedia contents desired by the user among the plurality of multimedia contents accumulated in the multimedia database using the inputted user characteristic data as the retrieval keyword so that automatic personalized extraction and display of the contents for the user preference can be performed based on the retrieval results.

The user terminal device 2 includes a user recording medium loading portion 4 for detachably loading the user description data recording medium 1 and inputting the user characteristic data as the keyword for retrieval and a keyword reading portion 5 for reading the retrieval keyword of the inputted user characteristic data. The user terminal device 2 further includes a retrieval and similarity evaluating portion 6 for retrieving the characteristics or specifics of each of the multimedia contents with reference to the inputted retrieval keyword and evaluating a measure of similarity between the user characteristic data and the characteristics of each of the contents. The user terminal device 2 further includes a contents selection and extraction portion 7 for selectively extracting the multimedia contents evaluated to be analogous or similar to the user characteristic data based on the similarity evaluation results. The resultant selectively extracted multimedia contents are displayed on a display unit (not shown) of the user terminal device 2. The operation of the multimedia contents automatic extraction system is controlled by a controller 8 which is provided in the user terminal device 2 in this embodiment.

It is noted here that the keyword reading portion 5, retrieval and similarity evaluating portion 6, contents selection and extraction portion 7 and controller 8 may be provided in the side of the multimedia contents storage supply portion 3 instead of providing in the side of the user terminal device 2.

### FIRST EMBODIMENT

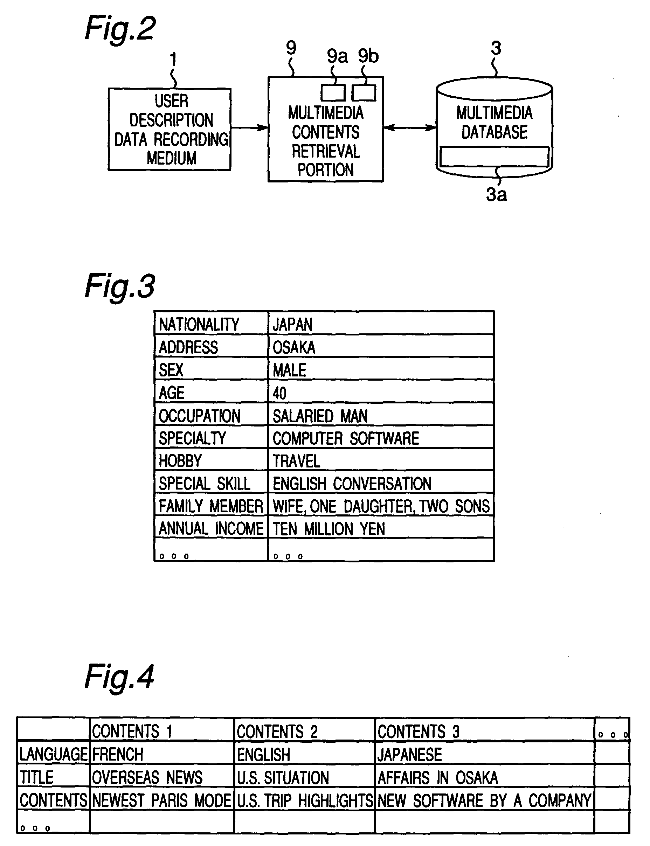

Fig. 2 shows a block configuration of a multimedia contents retrieval system for realizing a multimedia contents automatic retrieval system according to the first embodiment which is a modification of the multimedia contents extraction system shown in Fig. 1.

In this embodiment in comparison to the generic embodiment shown in Fig. 1, the contents storage supply portion 3 is comprised of a multimedia database and the user terminal device 2 is comprised of a multimedia contents retrieval portion 9 for retrieving the characteristics or specifics of the multimedia contents accumulated in the database 3 to thereby automatically retrieve the user desired contents coincident with the preference of the user.

The multimedia database 3 is normally comprised of a large capacity contents accumulation unit such as a hard disk for storing a vast amount of compressed multimedia contents of various categories. Each of the multimedia contents has contents characteristic data attached thereto serving as information representing the specifics of the contents. As the contents characteristic data, as shown in Fig. 4, items of language under usage, title and representative keyword of contents and the like are attached to and associated with each of the contents 1, 2 and 3.

Fig. 3 shows an example of the user characteristic data according to this embodiment. In this example, the characteristics and preferences of a user are items of such as nationality, address, sex, age, occupation, field of specialty, hobby, special skill, family member and annual income. These items of the user characteristic data are recorded beforehand in the user description data recording medium which is realized by, for example, an IC card, magnetic card, optical card, magnetic disk or optical disk.

In this arrangement, the user description data recording medium 1 may be comprised of a fixed memory region and a variable memory region, where the fixed memory region is for recording quasi-fixed items such as nationality, address, sex, occupation, field of specialty and family member, and the variable memory region is for recording variable items such as age, hobby, special skill, and annual income.

Moreover, the user characteristic data may further include items of essential data for psychologically evaluating preferences or characteristics of the user other than the above listed items.

In the construction of the multimedia contents retrieval system as shown in Fig. 2, the following describes a method of automatically extracting the expected contents to be coincident with the desired or interested contents for the user among from the multimedia contents accumulated in the multimedia contents database 3.

The multimedia contents retrieval portion 9 includes a contents characteristic data table forming unit 9a and priority evaluating unit 9b. Initially, the contents characteristic data table forming unit 9a extracts the representative keywords representing the specifics regarding to the usage language, title and contents associated with each of the multimedia contents from the plurality of multimedia contents accumulated in the database 3 and produces a list table of the contents characteristic data as shown in Fig. 4 to be held therein.

Then, upon application of the user description data recording medium 1 having recorded with user characteristic data to be loaded to the multimedia contents retrieval portion 9, each item of the inputted user characteristic data as shown in Fig. 3 is compared with the representative keywords of the listed contents characteristic data table as shown in Fig. 4 where the inputted user characteristic data is used as the retrieval keyword. Thus, the names of the contents are determined in the descending order of the number of the keywords of a larger degree of coincidence or analogy so that the determined contents characteristic data is successively extracted and displayed.

The priority evaluating unit 9b has a similarity evaluating or priority weighing function for retrieving the characteristics or specifics of each of the multimedia contents and evaluating a measure of similarity between the user characteristic data and the characteristics of each of the contents. Thus, the multimedia contents evaluated to be analogous or similar to the user characteristic data are selectively extracted based on the priority evaluation results. The contents characteristic data table forming unit 9a and priority evaluating unit 9b may be provided in the similarity evaluating portion 6 or contents selection extraction portion 7 in the generic construction shown in Fig. 1.

In this operation, it is noted here that the names of the contents may be displayed so that the user may selects the desired contents therefrom to be displayed or reproduced. Alternatively, instead of displaying the list of the contents characteristic data table, the contents evaluated to be analogous to the user preference may be automatically and directly generated to be displayed in the descending order based on a matching degree of the evaluation measure.

The similarity or priority evaluation is carried out in a manner as below. In the embodiment using the user characteristic data as shown in Fig. 3, the nationality of the use is Japan, and therefore the desirable language of the contents is determined to be Japanese and the contents containing the term "Japan" in the contents characteristic data table shown in Fig. 4 are searched and identified. Since the contents 3 contains the term "Japanese" in the contents characteristic data table and the term contains the term "Japan", the priority weight is added by one to the contents 3 meeting this requirement. Then, since the address of the user is in Osaka, the contents relating to Osaka are determined as desirable, and the weight is added by another one to the contents 3 having the title meeting this requirement.

Then, the presence or absence of the contents relating to the items of sex and age is examined, and since there are no contents meeting this requirement, no weight is added to any contents.

Then, since the occupation is a salaried man, the contents relating to a company are determined as desirable. Although there are no contents containing the term "salaried man" in the contents characteristic data table, the contents 3 includes the relating term "company" regarding the item of Contents, and therefore the weight 1 (one point) is added to the contents 3 having the representative keyword "Company A" meeting this requirement.

Further, the field of specialty of the user is a computer software, the contents relating to a computer or software are determined as desirable, and the contents containing the term "computer" or "software" in the contents characteristic data table are searched. Since the contents 3 include a part "soft" thereof, another weight 1 (one point) is added to the contents 3 having a representative keyword "software" meeting this requirement.

Then, since the hobby of the user is a travel, the contents relating to the travel are determined as desirable, and the weight 1 (one point) is added to the contents 2 having a particularly similar keyword "Trip" in the characteristic data thereof. Also, the special skill of the user is English conversation, the contents relating to "English" are determined as desirable, and since the contents 2 includes the term "English" relating to the Language meeting this requirement, the weight 1 is added to the contents 2.

Then, the presence or absence of the contents relating to the family make-up member is determined based on the actual family of the user. In this example, there are no contents meeting this requirement, and no weight is added to any contents. Neither is there any contents meeting the requirement of annual income, and therefore there is no weight added for this item.

As a result of the foregoing evaluation process, the priority weight is 0 point for the contents 1, 2 points for the contents 2, and 4 points for the contents 3. Thus, the contents 3 are determined most desirable, and the contents characteristic data relating to the language, title and contents of the Contents 3 are first displayed and outputted to the user. The contents 2 are determined as the next most desirable, and the contents characteristic data thereof are secondly displayed and outputted. The contents 1 have weight 0 point, and therefore the contents characteristic data thereof are not displayed.

It is noted here that, in the case where the retrieval keyword of the user characteristic data is not completely coincident with the representative keyword of the contents characteristic data but is partially matched therewith, the priority weight point to be added may be varied as 0.5, 0.3 and the like. Moreover, there may be accommodated a synonym dictionary for holding similar word clusters provided in the similarity evaluation unit (6, 9b) so that the retrieval keyword can be automatically transcribed to another synonym on the cluster when retrieving the contents characteristic data list.

By this operation described above, the automatic retrieval and display of the contents considered desirable for the user can be realized, and the user can audio-visually and selectively enjoy the contents 3 or 2 by watching the display as desired at anywhere and any time.

### SECOND EMBODIMENT

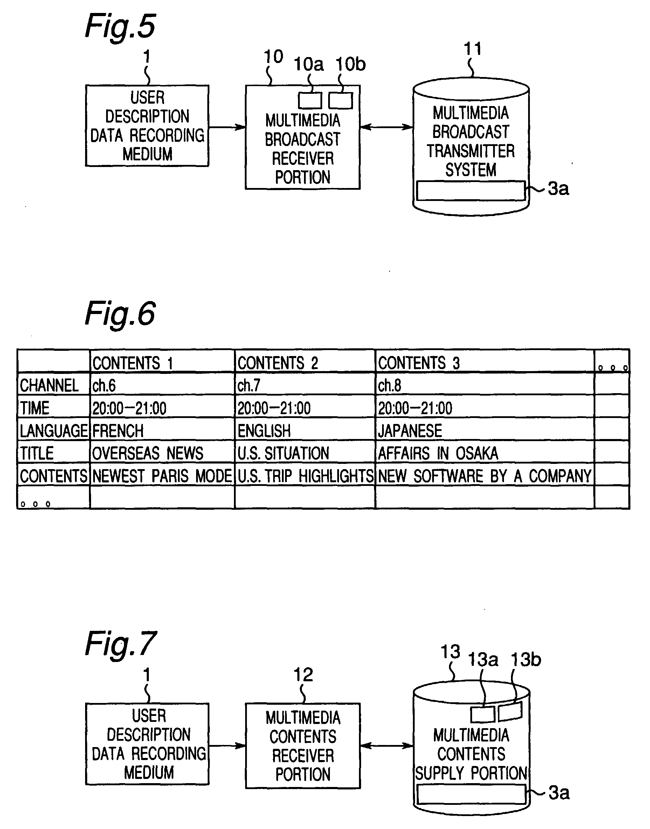

Fig. 5 shows a block configuration of a multimedia contents broadcast receiving system for realizing a multimedia contents automatic selective broadcast receiving system according to the second embodiment which is another modification of the multimedia contents extraction system shown in Fig. 1.

In this embodiment in comparison to the generic embodiment shown in Fig. 1, the contents storage supply portion 3 is comprised of a multimedia broadcast transmitter system 11 including a database 3a and the user terminal device 2 is comprised of a multimedia broadcast receiver portion 10 for automatically selecting and receiving the user desired broadcast contents coincident with the preference of the user using a user description data recording medium 1 adapted thereto.

The multimedia broadcast transmitter system 11 may include a multimedia database 3a storing a vast amount of compressed multimedia contents of various categories which are synchronously broadcasted via a plurality of channels. Each channel has keywords or the like representative information relating to items of language under usage, title and representative keyword of contents and the like which are attached to and associated with each of the broadcast contents. Moreover, each channel is assumed to periodically broadcast a list of programs as shown in Fig. 6 for each time.

In the multimedia broadcast receiving system, a method of automatically selecting and receiving a broadcast program desired by the user will be explained below.

The multimedia broadcast receiving portion 10 includes a broadcast contents characteristic data table forming unit 10a and a priority evaluation unit 10b and receives the program table of each channel broadcasted by the multimedia broadcast transmitter system 11 and holds the program table as a broadcast contents characteristic data table for each channel as shown in Fig. 6.

Then, upon application of the user description data recording medium 1 having recorded with user characteristic data to be loaded to the multimedia broadcast receiver portion 10, each item of the inputted user characteristic data as shown in Fig. 3 is compared with the representative keywords of the contents characteristic data listed in the program table as shown in Fig. 6 where the inputted user characteristic data is used as the retrieval keyword. Thus, the names of the contents are determined in the descending order of the number of the keywords of a larger degree of coincidence or analogy so that the determined broadcast contents are automatically selected and successively displayed.

The priority evaluation process is the same as that of the first embodiment.

As a result of the foregoing evaluation process, for example, the contents 3 are determined most desirable, and the contents characteristic data relating to the language, title and contents of the Contents 3 are first displayed and outputted to the user. The contents 2 are determined as the next most desirable, and the contents characteristic data thereof are secondly displayed and outputted.

By this operation described above, the automatic selection and display of the broadcast program of contents considered desirable for the user can be realized, and the user can audio-visually and selectively enjoy the contents 3 or 2 by watching the display as desired.

In this broadcast receiving system, the multimedia broadcast receiver portion is connected to the multimedia broadcast system and the multimedia broadcast receiver portion is loaded with the user characteristic data recording medium to input the user characteristic data and automatically choose the user desired program of contents among from the multimedia broadcast contents using the inputted user characteristic data as a retrieval keyword so that automatic personalized selection of the program contents for the user preference is realized based on the retrieval results.

### THIRD EMBODIMENT

Fig. 7 shows a block configuration of a multimedia contents transmission and receiving system according to the third embodiment which is further another modification of the multimedia contents extraction system shown in Fig. 1. The multimedia contents transmission and receiving system is a combination of a multimedia contents receiver portion 12 and a multimedia contents supply portion 13 connected thereto, using a user description data recording medium 1 adapted thereto.

In this embodiment in comparison to the generic embodiment shown in Fig. 1, each user terminal device 2 has a function of the multimedia contents receiver portion 12, and the multimedia contents supply portion 13 corresponding to the contents storage supply portion 3 is provided with the retrieval keyword reading portion 5, retrieval similarity evaluating portion 6, contents selection portion 7 and controller 8 together with the database 3a.

The multimedia contents supply portion 13 is normally comprised of a large capacity contents accumulation unit for storing a vast amount of compressed multimedia contents of various categories. Each of the multimedia contents has contents characteristic data attached thereto serving as information representing the specifics of the contents. As shown in Fig. 4, items of language under usage, title and representative keyword of contents and the like are attached to and associated with each of the contents 1, 2 and 3.

In this construction, a method of automatically selecting and transmitting/receiving the user desired contents will be explained below.

The multimedia contents supply portion 13 includes a contents characteristic data table forming unit 13a and a priority evaluating unit 13b and extracts the contents characteristic data such as the representative keywords relating to the items of the usage language, title and contents representing the specific characteristics of contents attached to each of the multimedia contents stored in the database, to thereby constitute the contents characteristic data table as shown in Fig. 4 to be held in the contents characteristic data table forming unit 13a.

Then, upon application of the user description data recording medium 1 having recorded with user characteristic data to be loaded to the multimedia contents receiver portion 12, the multimedia contents supply portion 13 reads the user characteristic data inputted to the contents receiver portion 12 therefrom and selects the user desired contents using the inputted user characteristic data as the retrieval keyword by comparing the retrieval keywords of the user characteristic data and the representative keywords of the contents characteristic data by means of the priority evaluating unit 13b. Thus, the selected user desired contents are transmitted from the contents supply portion 13 to the contents receiver portion 12 to be displayed to the user.

In this evaluation process, the names of the contents are determined in the descending order of the number of occurrences of the keywords having a larger degree of coincidence or analogy so that the determined contents are automatically selected and successively displayed. The priority evaluation process is the same as those of the first and second embodiments.

As a result of the foregoing evaluation process, for example, the contents 3 are determined most desirable, and the contents characteristic data relating to the language, title and contents of the Contents 3 are first displayed and outputted to the user. The contents 2 are determined as the next most desirable, and the contents characteristic data thereof are secondly displayed and outputted.

By this operation described above, the automatic transmission and receiving of the contents considered desirable for the user can be realized, and the user can audio-visually and selectively enjoy the contents 3 or 2 by watching the display as desired.

Each operation process described above can be realized as a computer program and the means for executing the same can be realized by a computer-implemented method.

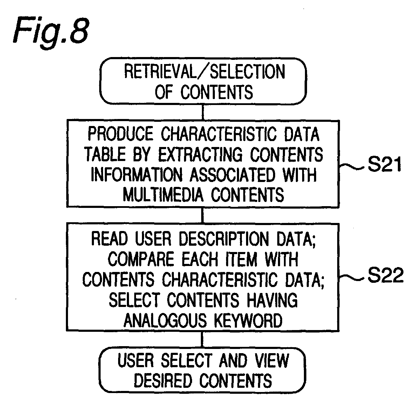

Fig. 8 shows a flow chart for explaining the same process. In step S21, the multimedia contents retrieval portion 9, multimedia broadcast receiver portion 10 or multimedia contents supply portion 13 reads out the contents specific information of the representative keywords relating to the language, title and contents associated with each of the multimedia contents stored in the database to produce a contents characteristic data table for each contents as shown in Figs. 4 and 6.

In step S22, the retrieval keyword reading portion 5 provided in the user terminal device 2 or multimedia contents storage supply portion 3 reads the user characteristic data indicative of the characteristics and preferences of the user when the user description data recording medium 1 is loaded to the user terminal device 2. Then, the retrieval similarity evaluating portion 6 compares the inputted retrieval keywords of the user characteristic data with the representative keywords of each item listed in the contents characteristic data table. In this way, the user desired contents are selected in the descending order of the number of occurrences of coincident or analogous keywords, so that the contents characteristic data of the selected contents is displayed to the user. In view of the displayed results, the user selects and audio-visually enjoys the desired contents, thereby realizing the automatic retrieval or selection of the multimedia contents.

### FOURTH EMBODIMENT

Fig. 9 shows another example of the user characteristic data list according to the fourth embodiment. The difference from the user characteristic data shown in Fig. 3 resides in the fact that, in this fourth embodiment, an item of audio-visual history is added to the items of nationality, address, sex, age, occupation specialty, hobby, special skill, family member and annual income. As the audio-visual history, every time the user actually extracted the contents in the past, the contents characteristic data thereof is sequentially added as a user characteristic data set to be recorded to the user description data recording medium 1. A re-writeable recording medium is used as the user description data recording medium 1 similarly to the first embodiment.

Once the audio-visual history is recorded to the user description data recording medium 1, when the same user description data recording medium 1 is used next time and thereafter for retrieving the multimedia contents, the coincidence or similarity measure of the contents characteristic data is evaluated in the same manner as described in the first embodiment with respect to all of the user characteristic items and the addition recorded item of the audio-visual history. In this arrangement, once a user characteristic item is used for retrieval, the used item is accumulated in addition as a new characteristic data sets 3, 4, ... in the audio-visual history region.

In the similarity evaluation process, when there are contents completely coincident with any of the characteristic data sets recorded in the audio-visual history region, the priority weight of the contents is set to, for example, 0 point. Also, when the number of the characteristic data sets exceeds a predetermined number, the characteristic data set is deleted in the order from the oldest one.

By this arrangement, the multimedia retrieval system gives priority to display the contents expected to be coincident with the preferences of the user, taking account of the user's past preferences. Moreover, since the priority weight of the contents once extracted in the past is set to 0 point, the contents already used in the past is avoided from being displayed.

As described above, according to the first aspect of the present invention, a multimedia contents extraction system comprises: a user characteristic data recording medium previously recorded with user characteristic data indicative of preference for a user; a contents storage supply portion for storing a plurality of multimedia contents and supplying desired contents to the user; and a user terminal device for selectively extracting and displaying the desired contents for the user among from the plurality of multimedia contents stored in the contents storage supply portion, wherein the user characteristic data recording medium is detachably loaded on the user terminal device so that the user characteristic data recorded on the user characteristic data recording medium is inputted to the user terminal unit, whereby the multimedia contents are automatically retrieved using the inputted user characteristic data as a retrieval keyword identifying characteristics of the multimedia contents which are of interest to the user, and the desired contents for the user are automatically selected and extracted to be displayed based on the retrieval results.

In this construction, the user terminal device includes: a user recording medium loading portion for loading the user characteristic data recording medium and inputting the user characteristic data as the keyword for retrieval; a keyword reading portion for reading the retrieval keyword of the inputted user characteristic data; a retrieval and similarity evaluating portion for retrieving the characteristics of each of the multimedia contents using the retrieval keyword and evaluating a measure of similarity between the user characteristic data and the characteristics of each of the contents; and a contents selection and extraction portion for selectively extracting the multimedia contents evaluated to be similar to the user characteristic data based on the similarity evaluation results.

By this arrangement, the contents desirable to the user can be selectively retrieved to be displayed without requiring the user to input the contents characteristic data on a keyboard, and thus the user can easily and quickly extract the contents which are of interest to the user.

According to a second aspect of the present invention, a user characteristic data recording medium is adapted to a multimedia contents extraction system including a user terminal device which automatically selects and extracts multimedia contents which are of interest to a user among from a plurality of multimedia contents previously accumulated in a contents storage supply portion, the user characteristic data recording medium being previously recorded with user characteristic data indicative of preference for a user, wherein the user characteristic data recording medium is detachably loaded on the user terminal device so that the user characteristic data recorded on the user characteristic data recording medium is inputted to the user terminal device, whereby the multimedia contents are automatically retrieved using the inputted user characteristic data as a retrieval keyword identifying characteristics of the multimedia contents which are of interest to the user, and the desired contents for the user are automatically selected and extracted to be displayed based on the retrieval results.

By this arrangement, the user description data recording medium can be portably brought with anywhere, and the automatic retrieval of contents desired by the user can be realized.

According to a third aspect of the present invention, a multimedia contents extraction method comprises the steps of: inputting user characteristic data indicative of preference of a user; searching multimedia contents desired by the user among a plurality of multimedia contents accumulated in a multimedia database using the inputted user characteristic data as a retrieval keyword so that automatic personalized extraction of the contents for the user preference is performed based on the retrieval results.

By this method, the user description data indicative of characteristics and preference of a user is inputted for automatically searching multimedia contents desired by the user using the inputted user characteristic data as the retrieval keyword so that automatic personalized extraction and display of the contents for the user preference can be performed anywhere in the world.

According to a fourth aspect of the present invention, a multimedia contents extraction method for automatically selecting and extracting user desired multimedia contents among from a plurality of multimedia contents previously accumulated in a contents storage supply portion using a user characteristic data recording medium previously recorded with user characteristic data which is indicative of preference for a user, the method comprises the steps of: inputting and reading the user characteristic data previously recorded on the user characteristic data recording medium by loading the user characteristic data recording medium on a user terminal device; automatically retrieving the multimedia contents using the inputted user characteristic data as a retrieval keyword identifying characteristics of the multimedia contents which are of interest to the user; and automatically selecting and extracting the user desired contents to be displayed based on the retrieval results.

According to a fifth aspect of the present invention, the contents storage supply portion is comprised of a database and the user terminal device is comprised of a contents retrieval portion for retrieving the characteristics of the multimedia contents accumulated in the database to thereby automatically retrieve the user desired contents coincident with the preference of the user.

According to a sixth aspect of the present invention, the contents storage supply portion is comprised of a multimedia broadcast system for broadcasting a plurality of multimedia contents and the user terminal device is comprised of a multimedia broadcast receiver portion for automatically and selectively receiving the user desired contents coincident with the preference of the user among from the multimedia broadcast contents transmitted from the multimedia broadcast system.

By this arrangement, the broadcast program of the contents desirable to the user can be automatically selected to be displayed without requiring the user to input the contents characteristic data on a keyboard and the user can enjoy the broadcast program coincident with the preference of the user.

In this arrangement, the multimedia broadcast receiver portion is connected to the multimedia broadcast system and the multimedia broadcast receiver portion is loaded with the user characteristic data recording medium to input the user characteristic data and automatically choose the user desired contents among from the multimedia broadcast contents using the inputted user characteristic data as a retrieval keyword so that automatic personalized extraction of the contents for the user preference is performed based on the retrieval results.

By this arrangement, the user description data indicative of characteristics and preference of a user is inputted for automatically searching multimedia broadcast contents desired by the user using the inputted user characteristic data as the retrieval keyword so that automatic personalized selection and display of the broadcast contents for the user preference can be performed anywhere in the world.

According to a seventh aspect of the present invention, the contents storage supply portion is comprised of a contents supply portion including a database accumulating a plurality of multimedia contents to be extracted, and the user terminal device is comprised of a contents receiver portion for receiving the multimedia contents transmitted from the contents supply portion, wherein the contents supply portion reads the user characteristic data inputted to the contents receiver portion therefrom and selects the user desired contents using the inputted user characteristic data as the retrieval keyword, whereby the selected user desired contents are transmitted to the contents receiver portion from the contents supply portion.

By this arrangement, the multimedia contents supply portion may selectively supply the information of the contents coincident with the preference of the user, and transmission channels can be effectively used.

According to an eighth aspect of the present invention, the user characteristic data previously recorded on the user characteristic data recording medium is inputted to the multimedia broadcast receiver portion, whereby the multimedia broadcast receiver portion automatically retrieves the multimedia broadcast contents using the inputted user characteristic data as a retrieval keyword identifying characteristics of the multimedia broadcast contents which are of interest to the user, and, based on the retrieval results, the user desired contents are automatically selected among from the multimedia broadcast contents transmitted from the multimedia broadcast system.

By this arrangement, the user description data recording medium can be portably brought with anywhere, and the automatic selection of the broadcast contents desired by the user can be realized.

In the first to eighth aspects, the user characteristic data is comprised of at least one combination of nationality, address, sex, age, occupation, field of specialty, hobby, special skill, family constituent and annual income.

By this arrangement, the preferences of the user can be represented as a generic keyword and the coincidence comparison between the retrieval keyword and the contents characteristic keyword can be objectively evaluated. Therefore, regardless of the type of the retrieval or receiving means and the database, more versatile retrieval and selection can be realized.

In this arrangement, the user characteristic data may include data of audiovisual extraction history of the contents of which the extraction was recorded in the past. Moreover, the data of the audiovisual extraction history may include a characteristic data set in each contents and wherein the contents coincident to any of the characteristic data set are not selected.

By this arrangement, the multimedia retrieval system gives priority to display the contents expected to be coincident with the preferences of the user, taking account of the user's past preferences. Moreover, since the priority weight of the contents once extracted in the past is set to 0 point, the contents already used in the past is avoided from being displayed.

As described above, according to the present invention, there can be provided an improved multimedia contents extraction system and method for automatically extracting multimedia contents desired by a user with high accuracy and reduction of time consumption. Thus, accurate and quick extraction of the desired contents can be realized by automatically identifying the contents of interest to the user without requiring the user to specify a keyword for a search criteria on a keyboard input means.

## Claims

1. A multimedia contents extraction system comprising:
a user characteristic data recording medium (1) previously recorded with user characteristic data (Figs. 3, 9) indicative of preference for a user;
a contents storage supply portion (3) for storing a plurality of multimedia contents and supplying desired contents to the user; and
a user terminal device (2) for selectively extracting and displaying the desired contents for the user among from the plurality of multimedia contents stored in the contents storage supply portion (3),
wherein the user characteristic data recording medium (1) is detachably loaded on the user terminal device (2) so that the user characteristic data recorded on the user characteristic data recording medium (1) is inputted to the user terminal unit, whereby the multimedia contents are automatically retrieved using the inputted user characteristic data as a retrieval keyword identifying characteristics of the multimedia contents which are of interest to the user, and the desired contents for the user are automatically selected and extracted to be displayed based on the retrieval results.

2. The multimedia contents extraction system according to claim 1, wherein the user terminal device (2) includes: a user recording medium loading portion (4) for loading the user characteristic data recording medium (1) and inputting the user characteristic data as the keyword for retrieval; a keyword reading portion (5) for reading the retrieval keyword of the inputted user characteristic data; a retrieval and similarity evaluating portion (6) for retrieving the characteristics of each of the multimedia contents using the retrieval keyword and evaluating a measure of similarity between the user characteristic data and the characteristics of each of the contents; and a contents selection and extraction portion (7) for selectively extracting the multimedia contents evaluated to be similar to the user characteristic data based on the similarity evaluation results.

3. A user characteristic data recording medium (1) adapted to a multimedia contents extraction system including a user terminal device (2) which automatically selects and extracts multimedia contents which are of interest to a user among from a plurality of multimedia contents previously accumulated in a contents storage supply portion (3), the user characteristic data recording medium (1) being previously recorded with user characteristic data (Figs. 3, 9) indicative of preference for a user,
wherein the user characteristic data recording medium (1) is detachably loaded on the user terminal device (2) so that the user characteristic data recorded on the user characteristic data recording medium (1) is inputted to the user terminal device, whereby the multimedia contents are automatically retrieved using the inputted user characteristic data as a retrieval keyword identifying characteristics of the multimedia contents which are of interest to the user, and the desired contents for the user are automatically selected and extracted to be displayed based on the retrieval results.

4. A multimedia contents extraction method for automatically selecting and extracting user desired multimedia contents among from a plurality of multimedia contents previously accumulated in a contents storage supply portion (3) using a user characteristic data recording medium (1) previously recorded with user characteristic data which is indicative of preference for a user, the method comprising:
inputting and reading the user characteristic data previously recorded on the user characteristic data recording medium (1) by loading the user characteristic data recording medium (1) on a user terminal device (2);
automatically retrieving the multimedia contents using the inputted user characteristic data as a retrieval keyword identifying characteristics of the multimedia contents which are of interest to the user; and
automatically selecting and extracting the user desired contents to be displayed based on the retrieval results.

5. The multimedia contents extraction system according to claim 1 or 2, wherein the contents storage supply portion (3) is comprised of a database (3a) and the user terminal device (2) is comprised of a contents retrieval portion (9) for retrieving the characteristics of the multimedia contents accumulated in the database to thereby automatically retrieve the user desired contents coincident with the preference of the user.

6. The multimedia contents extraction system according to claim 1, 2 or 5, wherein the contents storage supply portion (3) is comprised of a multimedia broadcast system (11) for broadcasting a plurality of multimedia contents and the user terminal device (2) is comprised of a multimedia broadcast receiver portion (10) for automatically and selectively receiving the user desired contents coincident with the preference of the user among from the multimedia broadcast contents transmitted from the multimedia broadcast system (11).

7. The multimedia contents extraction system according to claim 6, wherein the multimedia broadcast receiver portion (10) is connected to the multimedia broadcast system (11) and the multimedia broadcast receiver portion (10) is loaded with the user characteristic data recording medium (1) to input the user characteristic data and automatically choose the user desired contents among from the multimedia broadcast contents using the inputted user characteristic data as a retrieval keyword so that automatic personalized extraction of the contents for the user preference is performed based on the retrieval results.

8. The multimedia contents extraction system according to claim 1, 2 or 5, wherein the contents storage supply portion (3) is comprised of a contents supply portion (13) including a database (3a) accumulating a plurality of multimedia contents to be extracted, and the user terminal device (2) is comprised of a contents receiver portion (12) for receiving the multimedia contents transmitted from the contents supply portion (13), wherein the contents supply portion (13) reads the user characteristic data inputted to the contents receiver portion (12) therefrom and selects the user desired contents using the inputted user characteristic data as the retrieval keyword, whereby the selected user desired contents are transmitted to the contents receiver portion (12) from the contents supply portion (13).

9. The user characteristic data recording medium (1) according to claim 3, wherein the user characteristic data previously recorded on the user characteristic data recording medium (1) is inputted to the multimedia broadcast receiver portion (10), whereby the multimedia broadcast receiver portion (10) automatically retrieves the multimedia broadcast contents using the inputted user characteristic data as a retrieval keyword identifying characteristics of the multimedia broadcast contents which are of interest to the user, and, based on the retrieval results, the user desired contents are automatically selected among from the multimedia broadcast contents transmitted from the multimedia broadcast system (11).

10. The multimedia contents extraction system according to claim 1,2,5,6,7,8 or 9, wherein the user characteristic data is comprised of at least one combination of nationality, address, sex, age, occupation, field of specialty, hobby, special skill, family constituent and annual income.

11. The user characteristic data recording medium (1) according to claim 3, wherein the user characteristic data is comprised of at least one combination of nationality, address, sex, age, occupation, field of specialty, hobby, special skill, family constituent and annual income.

12. The multimedia contents extraction method according to claim 4, wherein the user characteristic data is comprised of at least one combination of nationality, address, sex, age, occupation, field of specialty, hobby, special skill, family constituent and annual income.

13. The multimedia contents extraction system according to claim 10, wherein the user characteristic data includes data of audiovisual extraction history of the contents.

14. The multimedia contents extraction system according to claim 13, wherein the data of the audiovisual extraction history includes a characteristic data set in each contents and wherein the contents coincident to any of the characteristic data set are not selected.

15. A multimedia contents extraction method comprising:
inputting user characteristic data indicative of preference of a user;
searching multimedia contents desired by the user among a plurality of multimedia contents accumulated in a multimedia database using the inputted user characteristic data as a retrieval keyword so that automatic personalized extraction of the contents for the user preference is performed based on the retrieval results.
